# EUROPÄISCHE PATENTANMELDUNG

(11) **EP 0 673 146 A1**
(43) Veröffentlichungstag der Anmeldung: **20.09.1995**
(21) Anmeldenummer: 95102910.7
(22) Anmeldetag: 01.03.1995
(51) Int. Cl.: H04M 19/02

(54) **Verfahren zur Zuteilung, einander paarweise zugeordneter Rufsignaleinheiten digitaler Zeitmultiplex-Fernsprechvermittlungsstellen**

(30) Priorität: 11.03.1994 DE 4408321
(71) Anmelder: SIEMENS AKTIENGESELLSCHAFT, D-80333 München (DE)
(72) Erfinder: Prey, Gerhard, Ing., D-82223 Eichenau (DE)

(57) **Zusammenfassung**

Verfahren zur Zuteilung einander paarweise zugeordneter Rufsignaleinheiten (RGMG0, RGMG1) digitaler Zeitmultiplex-Fernsprechvermittlungsstellen durch Paare von in Lastteilung arbeitenden Steuerungen, (DLUCO, DLUC1) die nicht miteinander kommunizieren können. Die Steuerungen fordern unabhängig voneinander von der einen oder anderen Rufsignaleinheit solange Rufleistung an bis ihnen von einer der Rufsignaleinheiten das Erreichen eines vorgegebenen Ausmaßes an Mehrbelastung signalisiert wird, um daraufhin die Anforderungslast an die signalisierende Rufsignaleinheit zu reduzieren. Hierdurch gute Auslastung und weitgehende Vermeidung von Wartezeiten wegen abgewiesener Rufwünsche.

## Beschreibung

Die Erfindung betrifft ein Verfahren zur Zuteilung einander paarweise zugeordneter Rufsignaleinheiten digitaler Zeitmultiplex-Fernsprechvermittlungsstellen gemäß dem Oberbegriff des Patentanspruchs 1.

Es liegt demnach eine Konstellation vor, bei der zur Lieferung der Rufsignale Paare einander zugeordneter Rufsignaleinheiten vorhanden sind, die im Normalbetrieb jeweils einer festgelegten Hälfte einer Gesamtheit von Fernsprechteilnehmern zugeordnet sind. Da ein Teilnehmerruf aus der wiederholten Abfolge einer Phase der Rufstromlieferung und einer sich daran anschließenden Phase der Rufpause demgegenüber n-facher Länge besteht, können die Rufsignaleinheiten in zeitlicher Staffelung quasi-gleichzeitig mehrere Rufe ausführen, ohne daß dies zu einer Mehrbelastung führt.

In bestimmten Grenzen können solche Rufsignaleinheiten aber auch tatsächlich gleichzeitig an mehrere Fernsprechteilnehmer Rufsignalstrom liefern. Aus Kosten- und Platzgründen ist es allerdings nicht möglich die Rufsignaleinheiten so zu dimensionieren, daß die Rufleistung dem Fall der möglichen Maximalanforderung entspricht. Die Rufsignaleinheiten sind vielmehr den Anforderungen einer Hauptverkehrsstunde entsprechend ausgelegt. Darüber hinausgehende Rufanforderungen müssen warten bis wieder eine Rufphase frei wird.

Im Falle eines Ausfalls einer Rufsignaleinheit übernimmt die jeweils andere eines Paares solcher Rufsignaleinheiten die Versorgung beider Hälften der betreffenden zugeordneten Gesamtheit von Fernsprechteilnehmern.

Zu dem vorausgesetzten Konzept gehört außerdem, daß die Zuteilung von Rufsignaleinheiten an Fernsprechteilnehmer durch ebenfalls paarweise einander zugeordnete, normalerweise in Lastteilung arbeitende und bei Ausfall einander vertretende Steuerungen von Anschlußgruppen erfolgt, in denen die Anschlußeinheiten der Fernsprechteilnehmer zusammengefaßt sind.

Da zwischen diesen Steuerungen keine Kommunikationsmöglichkeit besteht, wurde bei der Zuteilung von Rufsignaleinheiten bisher so vorgegangen, daß jede der Steuerungen maximal die Hälfte der planmäßig vorgesehenen Gesamtlast eines Paares von Rufsignaleinheiten vergibt. Es wurde hierdurch vermieden, daß wegen der zwischen den beiden Steuerungen unkoordinierten Vergabe ein und dieselbe Rufsignaleinheit wegen gleichzeitiger Anforderungen durch beide Steuerungen überlastet wird. In der Praxis läuft dies darauf hinaus, daß bei einer vorausgesetzten Höchstlast von 4 Rufen pro Rufphase jede Steuerung maximal zwei Rufe pro Phase anfordert. Es kann hierdurch allerdings die Situation entstehen, daß eine Steuerung, die schon zwei Rufe angefordert hat, einen weiteren Ruf abweist, obwohl durch die andere Steuerung erst ein Ruf zugeteilt worden ist, die betreffende Rufsignaleinheit also noch nicht voll ausgelastet ist. Es entstehen also unnötige Wartezeiten.

Die Aufgabe der Erfindung besteht nun darin, ein Verfahren anzugeben, das unter Voraussetzung der erläuterten Konstellation zu einer optimalen Auslastung der Rufsignaleinheiten führt, ohne daß hierzu die Möglichkeit eines Informationsaustausches zwischen den Steuerungen vorgesehen werden muß, was wegen der entsprechenden Dynamikanforderungen unerwünscht wäre.

Diese Aufgabe wird durch die im Kennzeichen des Patentanspruchs 1 angegebenen Merkmale gelöst.

Beim erfindungsgemäßen Verfahren fordern die Steuerungen unabhängig voneinander und ohne Rücksicht auf die Möglichkeit einer Belastung der Rufsignaleinheiten durch die jeweils andere Steuerung solange Rufleistung an, bis ihnen von einer der Rufsignaleinheiten das Erreichen eines vorgegebenen Ausmaßes an Mehrbelastung signalisiert wird. Erst daraufhin reduzieren sie die Anforderungslast.

Bei entsprechender Bemessung der Grenze für das zugelassene Ausmaß an Mehrbelastung kann einerseits erreicht werden, daß die Zeiten einer Überlastung einer Rufsignaleinheit so kurz ist, daß keine Beschädigung derselben zu befürchten ist und andererseits die Wahrscheinlichkeit, daß auf eine Zuteilung einer Rufsignaleinheit zur Ausführung eines Rufs gewartet werden muß, relativ gering ist.

Weitere Ausgestaltungen der Erfindung sind in den Unteransprüchen angegeben. Demnach kann die Reduzierung der Anforderungslast entweder durch vorübergehende Abweisung von Rufwünschen oder aber dadurch erfolgen, daß bei den einzelnen Rufen die Phase der Rufstromlieferung verkürzt oder aber die Rufpause verlängert wird.

Noch eine andere Ausgestaltung der Erfindung bezieht sich auf die Situation beim Ausfall einer der Rufsignaleinheiten. In diesem Fall fordern die beiden Steuerungen wie bisher nur noch höchstens die Hälfte derjenigen Ruflast an, die von der verbleibenden Rufsignaleinheit ohne Entstehen einer Überlastsituation geliefert werden kann. Es wird hierbei dem Umstand Rechnung getragen, daß es in dieser Situation ohne Einhalten solcher Grenzen sehr häufig, wenn nicht gar dauernd zu Überlastsituationen kommen wird.

Nachstehend wird die Erfindung anhand eines Ausführungsbeispiels unter Bezugnahme auf eine Zeichnung näher erläutert.

In der Zeichnung zeigen:
Figur 1 das Blockschaltbild einer Zeitmultiplex-Fernsprechvermittlungsstelle,
Figur 2 die Struktur einer digitalen Teilnehmerleitungseinheit einer solchen Fernsprechvermittlungsstelle,
Figur 3 die Gliederung eines die Rufsignaleinheiten umfassenden Teils einer solchen Teilnehmerleitungseinheit.

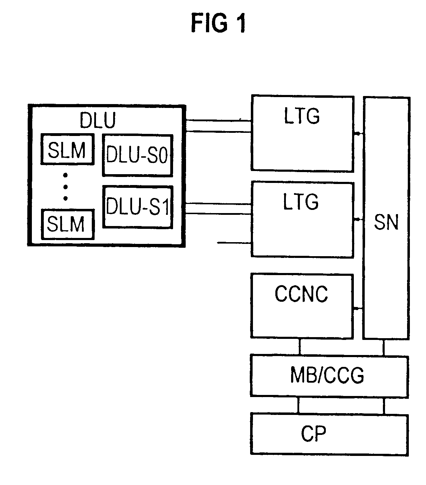

Die Figur 1 zeigt zur Veranschaulichung des Umfeldes, in dem das erfindungsgemäße Verfahren zur Anwendung kommt, das Blockschaltbild einer digitalen Fernsprechvermittlungsstelle.

Als zentrale Teile weist eine solche Vermittlungsstelle einen Koordinationsprozessor CP, ein zentrales Koppelfeld SN sowie ein Netz für zentrale Zeichengabekanäle CCNC auf. Der Informationsfluß von und zu dem Koordinationsprozessor CP erfolgt über eine Baugruppe MB, die auch Einrichtungen für die zentrale Taktversorgung enthält.

Zur Peripherie einer solchen Fernsprechvermittlungsstelle gehören Anschlußgruppen LTG sowie digitale Teilnehmerleitungseinheiten DLU.

Die Teilnehmerleitungseinheiten, von denen hier eine dargestellt ist, sind über jeweils zwei der erwähnten Anschlußbaugruppen LTG mit dem zentralen Koppelnetz SN verbunden.

Wesentliche Bestandteile einer digitalen Teilnehmerleitungseinheit DLU sind Teilnehmeranschlußbaugruppen SLM sowie zwei zentrale Funktionseinheiten DLU-S0 und DLU-S1, die unter anderem jeweils eine Steuerung sowie digitale Schnittstelleneinheiten enthalten.

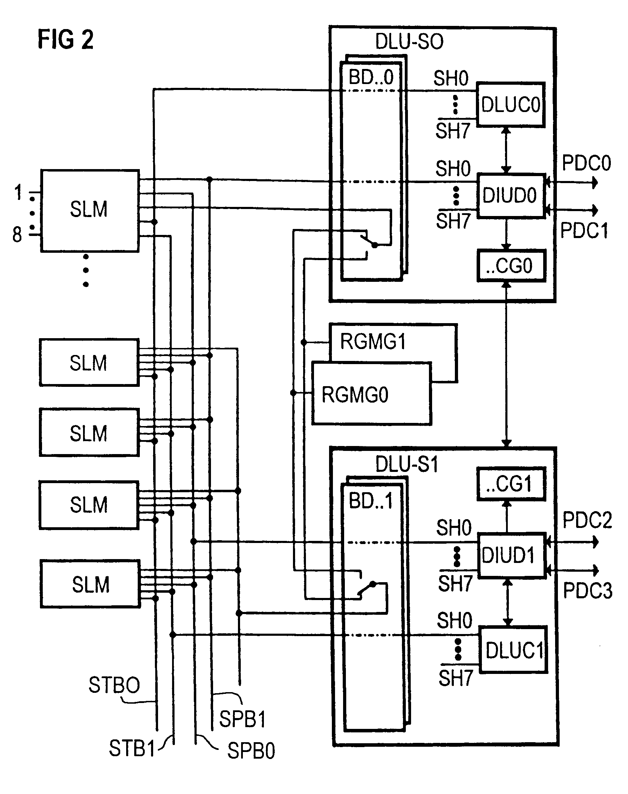

Die Figur 2 zeigt eine digitale Teilnehmerleitungseinheit DLU mehr ins einzelne gehend.

Auf der linken Seite sind wieder die erwähnten Teilnehmeranschlußbaugruppen SLM gezeigt und in der Detaildarstellung der zentralen Funktionseinheiten DLU-S0 und DLU-S1 sind die erwähnten Steuerungen, nämlich DLUC0 bis DLUC1 und die er-wähnten Schnittstelleneinheiten, nämlich DIUD0 und DIUD1 gezeigt. Die zentralen Funktionseinheiten DLU-0 und DLU-1 enthalten ferner jeweils einen Taktgenerator CG0 bzw. CG1 sowie eine Busverteilerbaugruppe BD0 bzw. BD1, über die die erwähnten Steuerungen Zugriff zu Steuerbusleitungen STB0, STB1 und damit zu den an diese Busleitungen angeschlossenen Teilnehmeranschlußbaugruppen SLM haben. Über die Busverteilerbaugruppen BD0 und BD1 bestehen außerdem Verbindungen zwischen Sprachbusleitungen SPB0 und SPB1, an die die Teilnehmeranschlußbaugruppen SLM angeschlossen sind, und den erwähnten Schnittstelleneinheiten DIUD0, DIUD1 und damit über Multiplexleitungen PDC0 bis PDC3 zum zentralen Koppelfeld SN der Vermittlungsstelle.

Schließlich sind Bestandteil der digitalen Teilnehmerleitungseinheit DLU Rufsignaleinheiten RGMG0 und RGMG1, die ebenfalls über die Busverteilerbaugruppen BD0 und BD1 Zugriff zu den Teilnehmeranschlußbaugruppen SLM haben.

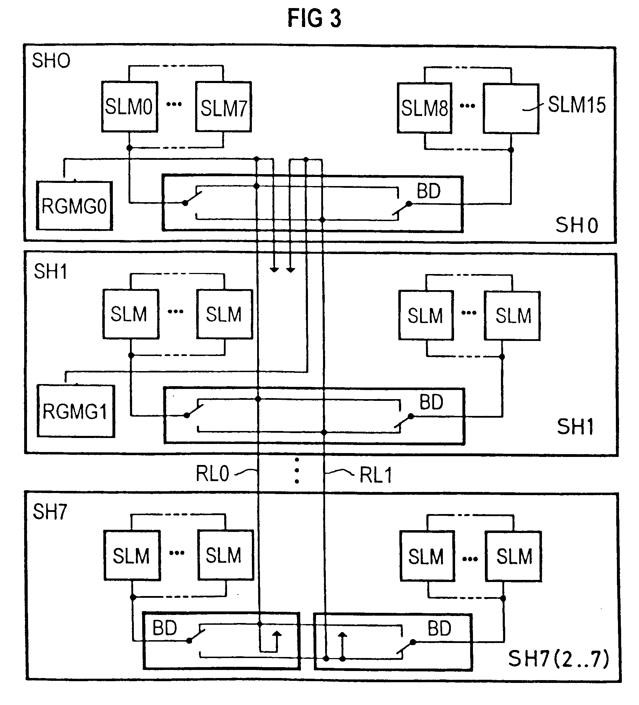

In Figur 3 ist die Zuordnung der Rufsignaleinheiten RGMG0 und RGMG1 zu Gruppen von Teilnehmeranschlußbaugruppen SLM veranschaulicht. Wie die Figur zeigt, sind jeweils eine Mehrzahl von Teilnehmeranschlußbaugruppen zusammengefaßt, beispielsweise 8 Teilnehmeranschlußbaugruppen SLM0 bis SLM7 bzw. SLM8 bis SLM15.

Solche Gruppen von Teilnehmeranschlußbaugruppen sind wiederum Bestandteil einer von 8 Übergruppen SH0 bis SH7.

Wie schon in Figur 2 angedeutet, sind die Busverteilerbaugruppen BD0 und BD1 mehrfach unterteilt und zwar im Hinblick auf die erwähnten 8 Übergruppen.

Die Busverteilerbaugruppen enthalten Umschalter, über die die Rufsignaleinheiten RGMG0 und RGMG1 je nach Schaltstellung über Ringleitungen RL0 und RL1 mit der einen Gruppe von Teilnehmeranschlußbaugruppen SLM0 bis SLM7 oder mit der anderen Gruppe von Teilnehmeranschlußbaugruppen SLM8 bis SLM15 der Überguppen SH0 bis SH7 verbunden sind.

Normalerweise ist also auf diese Weise jede der Rufsignaleinheiten einer Hälfte einer Mehrzahl von Teilnehmeranschlußbaugruppen zugeordnet.

Die in Figur 2 dargestellten Steuerungen DLC0 und DLC1 arbeiten unabhängig voneinander, es besteht auch kein gegenseitiger Informationsaustausch zwischen ihnen. Diese beiden Steuereinheiten arbeiten in Lastteilung, bedienen also beide Teilnehmeranschlußbaugruppen SLMA sowohl der einen als auch der anderen Hälfte der Gesamtheit von Teilnehmeranschlußbaugruppen.

Im Zusammenhang mit Teilnehmerrufen fordern diese Steuerungen Rufleistung entweder von der einen oder von der anderen Rufsignaleinheit an, je nachdem zu welcher Hälfte die Teilnehmeranschlußbaugruppe gehört, die den Rufstrom benötigt.

Wie eingangs schon angegeben, können die Rufsignaleinheiten durch zeitliche Versetzung der Zeitspannen der Rufe, während der Rufstrom geliefert wird, ohne Mehrbelastung quasi-gleichzeitig mehrere Teilnehmerrufe durchführen, darüberhinaus aber auch tatsächlich gleichzeitig an mehrere Teilnehmer Rufstrom liefern. Im letztgenannten Fall hat das Überschreiten einer bestimmten Belastungsgrenze lediglich zur Folge, daß die Rufspannung absinkt, ein Ruf aber immer noch, wenn auch mit verringerter Qualität durchgeführt werden kann.

Erfindungsgemaß gehen bei der Anforderung von Rufleistung die Steuerungen DLUC0 und DLUC1 nun so vor, daß sie unabhängig voneinander und ohne Rücksicht auf die mögliche Anforderung durch die jeweils andere Steuerung solange uneingeschränkt Rufleistung anfordern, bis von einer der dabei angesprochenen Rufsignaleinheiten das Erreichen eines vorgegebenen Ausmaßes an Mehrbelastung signalisiert wird. Daraufhin reduzieren beide die Anforderungslast an die signalisierende Rufsignaleinheit, bis innerhalb einer vorgegebenen Zeitspanne das Alarmsignal wegfällt.

Es kann hierdurch nicht die Situation entstehen, daß eine Rufsignalanforderung an eine Rufsignaleinheit unterbleibt, obwohl eine Rufsignaleinheit noch nicht ausgelastet ist.

Die Reduzierung der Anforderungslast kann in der Weise erfolgen, daß vorübergehend an die Steuerung gerichtete Rufwünsche abgewiesen werden. Es kann jedoch auch so vorgegangen werden, daß die Phase der Rufstromlieferung bei den einzelnen Rufen verringert wird, oder aber daß die Rufpause verlängert wird, so daß innerhalb eines Rufs in größeren Abständen die Rufstromlieferung erfolgt.

Die erwähnte Signalisierung einer eingetretenen Mehrbelastung erfolgt über Alarmleitungen, die im Hinblick auf den Ausfall der einen oder der anderen Rufsignaleinheit sowieso schon vorhanden sind. In diesem Falle hat dann nämlich die verbleibende Rufsignaleinheit für die Rufsignallieferung an Teilnehmeranschlußbaugruppen beider Hälften zu sorgen.

Der Ausfall einer der Rufsignaleinheiten wird angenommen, wenn die Mehrbelastungsalarmierung durch eine Rufsignaleinheit über die vorerwähnte Zeitspanne hinaus angedauert hat.

Ab diesem Zeitpunkt wird in Abweichung von den geschilderten Verhältnissen des Normalfalls von jeder der beiden Steuerungen jeweils nur noch eine geringere und vorzugsweise höchstens die Hälfte derjenigen Ruflast angefordert, die von der verbleibenden Rufsignaleinheit ohne Entstehen einer Überlastsituation geliefert werden kann. Es ist damit dem Umstand Rechnung getragen, daß anderenfalls die Wahrscheinlichkeit, daß Rufanforderungen abgewiesen werden müssen, unnötig stark ansteigt.

## Patentansprüche

1. Verfahren zur Zuteilung einander paarweise zugeordneter und bei Ausfall einander vertretender Rufsignaleinheiten (RMGM0, RMGM1) digitaler Zeitmultiplex-Fernsprechvermittlungsstellen, die wegen der wiederholten Abfolge jeweils einer Phase der Rufstromlieferung und einer daran anschließenden Phase der Rufpause demgegenüber n-facher Länge im Zuge eines einzelnen Rufs n zeitlich gestaffelte Rufe quasigleichzeitig ohne Mehrbelastung ausführen können und während der Phase der Rufstromlieferung tatsächlich gleichzeitig Rufstrom für mehr als einen Ruf liefern können, an Fernsprechteilnehmer jeweils einer festgelegten Hälfte einer Gesamtheit von Fernsprechteilnehmern durch einander ebenfalls paarweise zugeordnete, normalerweise in Lastteilung arbeitende und bei Ausfall einander vertretende Steuerungen (DLUC0, DLUC1)
**dadurch gekennzeichnet**, daß die Steuerungen (DLUC0, DLUC1) unabhängig voneinander von der einen oder der anderen Rufsignaleinheit (RGMG0, RMGM1) solange Rufleistung anfordern, bis ihnen von einer der Rufsignaleinheiten das Erreichen eines vorgegebenen Ausmaßes an Mehrbelastung signalisiert wird, um daraufhin die Anforderungslast an die signalisierende Rufsignaleinheit bis zum Wegfall der Mehrbelastungssignalisierung zu reduzieren.

2. Verfahren nach Anspruch 1,
**dadurch gekennzeichnet**, daß die Reduzierung der Anforderungslast durch vorübergehende Abweisung von Rufwünschen erfolgt.

3. Verfahren nach Anspruch 1,
**dadurch gekennzeichnet**, daß die Reduzierung der Anforderungslast dadurch erfolgt, daß bei den einzelnen Rufen die Phase der Rufstromlieferung verkürzt wird.

4. Verfahren nach Anspruch 1,
**dadurch gekennzeichnet**, daß die Reduzierung der Anforderungslast daduch erfolgt, daß bei den einzelnen Rufen die Rufpause verlängert wird.

5. Verfahren nach einem der vorhergehenden Ansprüche,
**dadurch gekennzeichnet**, daß die Signalisierung des Ausfalls einer Rufsignaleinheit (RGMG0, RGMG1) aus dem Andauern der sie betreffenden Mehrbelastungssignalisierung über eine bestimmte Zeitschwelle hinaus abgeleitet wird.

6. Verfahren nach Anspruch 5,
**dadurch gekennzeichnet**, daß bei Ausfall einer der Rufsignaleinheiten (RGMG0, RMGM1) die beiden Steuerungen jeweils nur noch eine geringere als diejenige Ruflast anfordern, die von der verbleibenden Rufsignaleinheit ohne Entstehen einer Überlastsituation geliefert werden kann.
